# EUROPÄISCHE PATENTSCHRIFT

(11) **EP 2 839 176 B1**
(45) Veröffentlichungstag und Bekanntmachung des Hinweises auf die Patenterteilung: **29.11.2017**
(21) Anmeldenummer: 13719053.4
(22) Anmeldetag: 18.04.2013
(51) Int. Cl.: F16C 35/04, F16C 19/54, F16C 19/06, F16C 27/06

(54) **AUSGLEICHSWELLENSYSTEMLAGERTRÄGEREINHEIT**
BEARING CARRIER ASSEMBLY FOR SYSTEM OF BALANCING SHAFTS
UNITÉ DE SUPPORT DE PALIER POUR SYSTÈME D'ARBRES D'ÉQUILIBRAGE

(30) Priorität: 18.04.2012 DE 102012206414
(43) Veröffentlichungstag der Anmeldung: 25.02.2015
(73) Patentinhaber: Aktiebolaget SKF, 415 50 Göteborg (SE)
(72) Erfinder: DILJE, Alexander, 97422 Schweinfurt (DE); HEDMAN, Torbjorn, F-37540 St Cyr sur Loire (FR); VAN DER MEI, Nijs, NL-3533 GE Utrecht (NL); BARTHELME, Jürgen, 97447 Frankenwinheim (DE)
(74) Vertreter: Kuhstrebe, Jochen
(86) Internationale Anmeldenummer: PCT/EP2013/058112
(87) Internationale Veröffentlichungsnummer: WO 2013/156573

(56) Entgegenhaltungen:
- EP-A1- 1 074 763
- DE-A1- 19 935 469
- DE-A1-102006 034 921
- JP-A- 2007 247 857
- US-A1- 2009 001 245

## Beschreibung

Es ist ein Kraftfahrzeug mit einer Vorrichtung bekannt, welche ein Gehäuse aufweist. Innerhalb des Gehäuses ist ein Ausgleichswellensystem angeordnet. Lager zur drehbaren Lagerung der Ausgleichswellen sind unmittelbar an dem Gehäuse befestigt. Das Ausgleichswellensystem ist zu einer kombinierten Verwendung mit einer Kurbelwelle des Kraftfahrzeugs vorgesehen. Lagerträgereinheiten mit zwei in Aufnahmeelementen aufgenommenen Wälzlagern für parallel angeordnete Getriebewellen sind beispielsweise aus der JP 2007247857 bekannt. Des Weiteren betrifft die EP1074763 A1 eine Lageranordnung für zwei parallel angeordnete Ausgleichswellen. Die Aufgabe der Erfindung besteht insbesondere darin, eine effiziente Lagerung von Ausgleichswellen zu erreichen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können. Erfindungsgemäß wird ein Verbrennungsmotor oder ein Hubkolbenmotor beansprucht, mit einer Ausgleichswellensystemlagereinheit mit einer Ausgleichswellensystemlagerträgereinheit mit einem ersten und wenigstens einem zweiten Aufnahmeelement, welche jeweils zur Aufnahme eines Lagers vorgesehen sind, und mit wenigstens einem materiellen Bereich, welcher zwischen dem ersten und dem zweiten Aufnahmeelement angeordnet ist. Unter einer "Ausgleichswellensystemlagerträgereinheit" soll insbesondere eine Trägereinheit verstanden werden, welche in zumindest einem Betriebszustand wenigstens einen Teil einer Gewichtskraft eines Lagers, welches zu einer Lagerung einer Ausgleichswelle eines Ausgleichswellensystems vorgesehen ist, aufnimmt. Unter einem "materiellen Bereich" soll insbesondere ein Bereich verstanden werden, welcher von einem Festkörper gebildet ist. Darunter, dass ein Bereich "zwischen" dem ersten und dem zweiten Aufnahmeelement angeordnet ist, soll insbesondere verstanden werden, dass der Bereich zwischen zwei parallelen Ebenen, die zwischen den Aufnahmeelementen angeordnet sind, angeordnet ist, wobei vorzugsweise der Bereich innerhalb eines Quaders angeordnet ist, welches der Quader mit dem minimalen Volumen aus der Menge der gedachten Quader ist, für die gilt, dass sie mit allen ihren Seiten wenigstens eines der Aufnahmeelemente berühren, wobei die Aufnahmeelemente - bis auf Berührungspunkte an den Seiten der Quader - vollständig innerhalb der Quader angeordnet sind. Vorzugsweise gibt es dabei für jeden Punkt des Bereichs wenigstens eine Gerade, auf welcher dieser Punkt des Bereichs und ein Punkt des ersten Aufnahmeelements und ein Punkt des zweiten Aufnahmeelements liegt. Mit einer erfindungsgemäßen Ausgestaltung kann eine hohe Effizienz erreicht werden. Insbesondere kann eine geringe Geräuschentwicklung bei einem Betrieb des Ausgleichswellensystems erreicht werden. Ferner kann insbesondere ein Umschließen der Lager durch das jeweilige Aufnahmeelement entlang eines gesamten Umfangs der Lager erreicht werden, wodurch eine gleichmäßige Belastung der Ringe der Lager entlang ihres Umfangs erzielt wird. Insbesondere kann eine stabile Bauweise erreicht werden. Außerdem kann Insbesondere eine Beschädigung eines Gehäuses des Ausgleichswellensystems, welches insbesondere aus Aluminium gebildet ist, durch die Rotation von Unwuchten an den Ausgleichswellen des Ausgleichswellensystems vermieden werden.

Ferner wird vorgeschlagen, dass die Ausgleichswellensystemlagerträgereinheit wenigstens eine Sicke aufweist, welche zumindest zu einem Großteil zwischen den Aufnahmeelementen angeordnet ist. Darunter, dass die Sicke zumindest zu einem Großteil "zwischen" den Aufnahmeelementen angeordnet ist, soll insbesondere verstanden werden, dass zumindest ein Großteil der Sicke innerhalb eines Quaders angeordnet ist, welches der Quader mit dem minimalen Volumen aus der Menge der gedachten Quader ist, für die gilt, dass sie mit allen ihren Seiten wenigstens eines der Aufnahmeelemente berühren, wobei die Aufnahmeelemente - bis auf Berührungspunkte an den Seiten der Quader - vollständig innerhalb der Quader angeordnet sind. Dadurch kann eine hohe Steifigkeit insbesondere in Bezug auf Biegungen der Ausgleichswellensystemlagerträgereinheit erreicht werden, bei welchen ein Teil des ersten Aufnahmeelements und ein Teil des zweiten Aufnahmeelements in entgegengesetzte Richtungen um eine Achse bewegt wird, welche senkrecht zu einer Verbindungsstrecke der beiden Mittelpunkte der Aufnahmeelemente und senkrecht zu einer Tiefenerstreckungsrichtung der Ausgleichswellensystemlagerträgereinheit verläuft.

Ferner wird eine Ausgleichswellensystemlagereinheit mit der Ausgleichswellensystemlagerträgereinheit vorgeschlagen, wobei die Ausgleichswellensystemlagereinheit ein erstes Wälzlager, welches von dem ersten Aufnahmeelement aufgenommen ist, und ein zweites Wälzlager, welches von dem zweiten Aufnahmeelement aufgenommen ist, aufweist.

Vorzugsweise ist die Ausgleichswellensystemlagerträgereinheit aus Stahl gebildet. Dadurch kann erreicht werden, dass Wellen, die von dem Wälzlager gelagert werden und ineinandergreifende Zahnräder aufweisen, bei Temperaturerhöhung nur eine geringe Abstandsänderung erfahren, wodurch geringe Betriebsgeräusche und geringer Verschleiß erreicht werden.

Vorzugsweise ist ein Abstand einer Drehachse des ersten Wälzlagers von einer Drehachse des zweiten Wälzlagers gleich groß oder größer als die 1,2-fache Summe eines Außenradiuses eines Außenrings des ersten Wälzlagers und eines Außenradiuses eines Außenrings des zweiten Wälzlagers. Unter einer "Drehachse" eines Wälzlagers soll insbesondere eine Achse verstanden werden, um welche sich bei einem Betriebsvorgang ein erster Lagerring des Wälzlagers um einen zweiten Lagerring des Wälzlagers dreht. Dadurch kann eine effektive Konstruktion des Ausgleichswellensystems erreicht werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

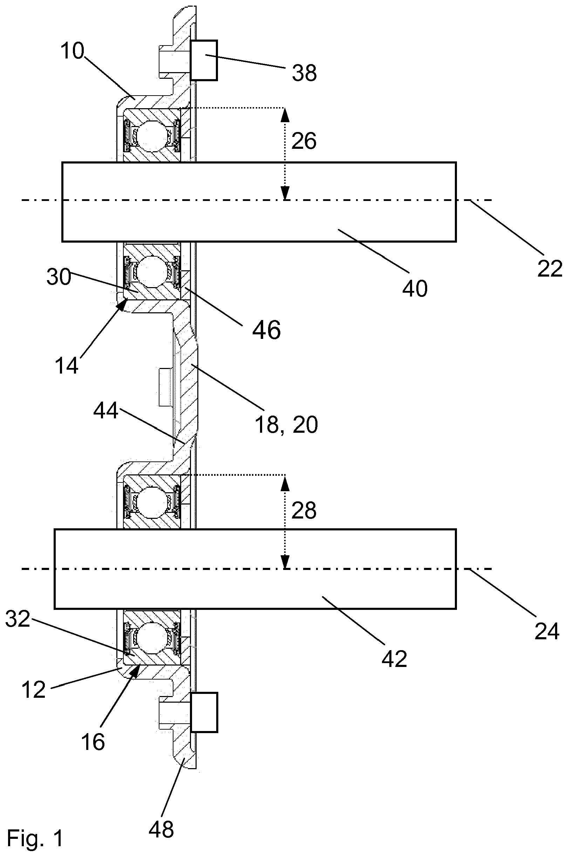

Fig. 1 zeigt einen Teilschnitt durch eine Ausgleichswellensystemlagerträgereinheit.

Figur 1 zeigt einen Teilschnitt durch eine Ausgleichswellensystemlagereinheit mit zwei Wälzlagern 14, 16 und einer einstückig ausgebildeten und aus Stahl gebildeten Ausgleichswellensystemlagerträgereinheit 44. Die Ausgleichswellensystemlagerträgereinheit 44 weist ein erstes und ein zweites Aufnahmeelement 10,12 auf, welche jeweils die Form eines bodenlosen Topfes aufweisen. Das Wälzlager 14 ist in das Aufnahmeelement 10 aufgenommen und ist durch das Aufnahmeelement 10 und einen Haltering 46 der Ausgleichswellensystemlagereinheit, der an die Ausgleichswellensystemlagerträgereinheit durch Laserschweißen angeschweißt ist, formschlüssig an der Ausgleichswellensystemlagerträgereinheit befestigt. Das Wälzlager 16 ist in das Aufnahmeelement 12 aufgenommen und ist durch das Aufnahmeelement 12 und einen weiteren Haltering der Ausgleichswellensystemlagereinheit, der an die Ausgleichswellensystemlagerträgereinheit durch Laserschweißen angeschweißt ist, formschlüssig an der Ausgleichswellensystemlagerträgereinheit befestigt. Ein materieller Bereich 18 der Ausgleichswellensystemlagerträgereinheit ist zwischen den Aufnahmeelementen angeordnet.

Ferner sind die Aufnahmeelemente beabstandet voneinander angeordnet. Eine Sicke 20 ist vollständig zwischen den Aufnahmeelementen angeordnet. Die Wälzlager sind beide als Kugellager ausgebildet.

Des Weiteren ist ein Abstand einer Drehachse 22 des ersten Wälzlagers 14 von einer Drehachse 24 des zweiten Wälzlagers 16 größer als die 1,2-fache Summe eines Außenradiuses 26 eines Außenrings 30 des ersten Wälzlagers 14 und eines Außenradiuses 28 eines Außenrings 32 des zweiten Wälzlagers 16. Der Außenring 30 liegt entlang seines gesamten Umfangs an seinem Außenradius 26 an dem Aufnahmeelement 10 an.

Die Ausgleichswellensystemlagereinheit ist Teil einer Vorrichtung, welche ein Gehäuse aufweist und welche ein Dämpfungselement 38 aufweist, dass an einer Stelle angeordnet ist, an welcher die Ausgleichswellensystemlagereinheit an dem Gehäuse befestigt ist. Das Dämpfungselement 38 kann als Gummielement oder Kunststoffelement ausgebildet sein.

Zwei Ausgleichswellen 40, 42 der Vorrichtung werden von den Wälzlagern gelagert. Sie sind durch Presssitze an den jeweiligen Innenringen der Wälzlager befestigt. Die Ausgleichswellensystemlagereinheit lässt sich als eine einzige Einheit an das Gehäuse montieren, und zwar insbesondere durch verschrauben an den Stellen, an denen Dämpfungselemente 38 angeordnet sind. Eine Bördelung 48 trägt zur Steifigkeit bei.

In einer alternativen Ausführungsform ist zwischen dem Wälzlager 14 und dem Aufnahmeelement 10 ein Dämpfungselement angeordnet. Insbesondere kann dieses Dämpfungselement hülsenförmig ausgebildet sein und einen größeren Außendurchmesser aufweisen als das Wälzlager 14 und aus einem Elastomer sein. Auf das Dämpfungselement kann dabei ein Druck ausgeübt sein.

Die Vorrichtung weist einen erfindungsgemäßen Verbrennungsmotor bzw. einen Hubkolbenmotor auf. Ferner kann die Vorrichtung als Kraftfahrzeug, insbesondere als PKW, ausgebildet sein. In diesen Fällen werden Sicken des Gehäuses zur Zentrierung an einem Motorgehäuse verwendet.

Durch die Dämpfungselemente kann eine Verschleiß- und Geräuschreduktion erreicht werden.

Anstatt des Halterings 46 kann das Wälzlager 14 durch Verstemmen, Verkleben, Einspritzungen oder anderweitige stoff-, form- oder kraftschlüssige Verfahren befestigt werden.

Durch die Ausbildung der Ausgleichswellensystemlagerträgereinheit aus Stahl wird erreicht, dass Eingrifftiefen von zwei Zahnrädern, von welchen eines auf der Ausgleichswelle 40 und das andere auf der Ausgleichswelle 42 befestigt ist und deren Zähne ineinandergreifen, bei Erhitzung aufgrund der geringen Wärmeausdehnung von Stahl nur eine geringe Veränderung erfahren, so dass durch Bewegungen der Zahnräder bei höheren oder normalen Temperaturen nur eine geringe Geräuschentwicklung erfolgt. Das Gehäuse ist aus Aluminium gebildet. Aufgrund der Ausgleichswellensystemlagerträgereinheit können Wärmeausdehnungen des Gehäuses die Eingriffstiefen nicht ändern. Üben die Aufnahmeelemente jeweils einen Radialdruck auf die Wälzlager aus, so kann aufgrund der Ausführung der Aufnahmeelemente aus Stahl erreicht werden, dass sich dieser Druck bei Temperaturveränderungen nur gering ändert, wodurch ein geringer Lagerverschleiß erreicht wird. Die Kugellager können deep grove ball bearings sein, insbesondere mit Eigenschmierung und insbesondere mit anliegenden oder nicht anliegenden Dichtungen.

Die Ausgleichswellensystemlagerträgereinheit erlaubt ferner eine gute axiale Fixierung an dem Gehäuse, was geringe Betriebsgeräusche bewirkt.

**Bezugszeichenliste**

| | |
|---|---|
| 10 | Aufnahmeelement |
| 12 | Aufnahmeelement |
| 14 | Wälzlager |
| 16 | Wälzlager |
| 18 | Bereich |
| 20 | Sicke |
| 22 | Drehachse |
| 24 | Drehachse |
| 26 | Außenradius |
| 28 | Außenradius |
| 30 | Außenring |
| 32 | Außenring |
| 38 | Dämpfungselement |
| 40 | Ausgleichswelle |
| 42 | Ausgleichswelle |
| 44 | Ausgleichswellensystemlagerträgereinheit |
| 46 | Haltering |
| 48 | Bördelung |

## Patentansprüche

1. Verbrennungsmotor oder Hubkolbenmotor mit einer Ausgleichswellensystemlagereinheit mit einer Ausgleichswellensystemlagerträgereinheit mit
einem ersten und wenigstens einem zweiten Aufnahmeelement (10, 12), welche jeweils zur Aufnahme eines Lagers (14, 16) vorgesehen sind, und mit wenigstens einem materiellen Bereich (18), welcher zwischen dem ersten und dem zweiten Aufnahmeelement (10, 12) angeordnet ist.

2. Verbrennungsmotor oder Hubkolbenmotor nach Anspruch 1, **dadurch gekennzeichnet, dass** die Aufnahmeelemente (10, 12) beabstandet voneinander angeordnet sind.

3. Verbrennungsmotor oder Hubkolbenmotor nach einem der Ansprüche 1 oder 2, **gekennzeichnet durch** wenigstens eine Sicke (20), welche zumindest zu einem Großteil zwischen den Aufnahmeelementen (10, 12) angeordnet ist.

4. Verbrennungsmotor oder Hubkolbenmotor nach einem der vorherigen Ansprüche, wobei die Ausgleichswellensystemlagerträgereinheit aus Stahl gebildet ist.

5. Verbrennungsmotor oder Hubkolbenmotor nach einem der vorherigen Ansprüche, wobei die Ausgleichswellensystemlagereinheit ein erstes Wälzlager (14), welches von dem ersten Aufnahmeelement (10) aufgenommen ist, und ein zweites Wälzlager (16), welches von dem zweiten Aufnahmeelement (12) aufgenommen ist, aufweist.

6. Verbrennungsmotor oder Hubkolbenmotor nach Anspruch 5, wobei ein Abstand einer Drehachse (22) des ersten Wälzlagers (14) von einer Drehachse (24) des zweiten Wälzlagers (16) gleich groß oder größer ist als die 1,2-fache Summe eines Außenradiuses (26) eines Außenrings (30) des ersten Wälzlagers (14) und eines Außenradiuses (28) eines Außenrings (32) des zweiten Wälzlagers (16).

7. Verbrennungsmotor oder Hubkolbenmotor nach einem der Ansprüche 5 oder 6, wobei die Ausgleichswellensystemlagereinheit wenigstens eine Dämpfungseinheit aufweist, welche an zumindest einem der Wälzlager (14) anliegt.

8. Verbrennungsmotor oder Hubkolbenmotor nach einem der Ansprüche 5 bis 7, **dadurch gekennzeichnet, dass** das erste Aufnahmeelement (10) das erste Wälzlager (14) entlang eines gesamten Umfangs des Wälzlagers umgibt.

9. Verbrennungsmotor oder Hubkolbenmotor nach einem der vorhergehenden Ansprüche, der ein Gehäuse und wenigstens einem Dämpfungselement (38) aufweist, welches an einer Stelle angeordnet ist, an welcher die Ausgleichswellensystemlagereinheit an dem Gehäuse befestigt ist.

## Claims

1. Internal combustion engine or reciprocating piston engine having a balancing shaft system bearing unit with a first and at least a second seat element (10, 12), which are provided in each case for seating a bearing (14, 16), and with at least one material region (18) which is arranged between the first and the second seat element (10, 12).

2. Internal combustion engine or reciprocating piston engine according to Claim 1, **characterized in that** the seat elements (10, 12) are arranged spaced apart from one another.

3. Internal combustion engine or reciprocating piston engine according to either of Claims 1 and 2, **characterized by** at least one bead (20) which is arranged at least to a large extent between the seat elements (10, 12).

4. Internal combustion engine or reciprocating piston engine according to one of the preceding claims, the balancing shaft system bearing carrier unit being formed from steel.

5. Internal combustion engine or reciprocating piston engine according to one of the preceding claims, the balancing shaft system bearing unit having a first anti-friction bearing (14) which is seated by the first seat element (10) and a second anti-friction bearing (16) which is seated by the second seat element (12).

6. Internal combustion engine or reciprocating piston engine according to Claim 5, a spacing of a rotational axis (22) of the first anti-friction bearing (14) from a rotational axis (24) of the second anti-friction bearing (16) being greater than or equal to 1.2 times the sum of an outer radius (26) of an outer ring (30) of the first anti-friction bearing (14) and an outer radius (28) of an outer ring (32) of the second anti-friction bearing (16).

7. Internal combustion engine or reciprocating piston engine according to either of Claims 5 and 6, the balancing shaft system bearing unit having at least one damping unit which bears against at least one of the anti-friction bearings (14).

8. Internal combustion engine or reciprocating piston engine according to one of Claims 5 to 7, **characterized in that** the first seat element (10) surrounds the first anti-friction bearing (14) along an entire circumference of the anti-friction bearing.

9. Internal combustion engine or reciprocating piston engine according to one of the preceding claims, which has a housing and at least one damping element (38) which is arranged at a location, at which the balancing shaft system bearing unit is fastened to the housing.

## Revendications

1. Moteur à combustion interne ou moteur à pistons alternatifs avec une unité de palier pour système d'arbres d'équilibrage avec une unité de support de palier pour système d'arbres d'équilibrage, avec un premier et au moins un deuxième éléments de réception (10, 12), qui sont prévus pour recevoir chacun un palier (14, 16), et avec au moins une région matérielle (18), qui est disposée entre le premier et le deuxième éléments de réception (10, 12).

2. Moteur à combustion interne ou moteur à pistons alternatifs selon la revendication 1, **caractérisé en ce que** les éléments de réception (10, 12) sont disposés à distance l'un de l'autre.

3. Moteur à combustion interne ou moteur à pistons alternatifs selon une des revendications 1 ou 2, **caractérisé par** au moins une moulure (20), qui est disposée au moins pour une grande partie entre les éléments de réception (10, 12).

4. Moteur à combustion interne ou moteur à pistons alternatifs selon l'une quelconque des revendications précédentes, dans lequel l'unité de support de palier pour système d'arbres d'équilibrage est formée en acier.

5. Moteur à combustion interne ou moteur à pistons alternatifs selon l'une quelconque des revendications précédentes, dans lequel l'unité de palier pour système d'arbres d'équilibrage présente un premier palier à roulement (14), qui est logé dans le premier élément de réception (10), et un second palier à roulement (16), qui est logé dans le deuxième élément de réception (12).

6. Moteur à combustion interne ou moteur à pistons alternatifs selon la revendication 5, dans lequel une distance d'un axe de rotation (22) du premier palier à roulement (14) à un axe de rotation (24) du second palier à roulement (16) est égale ou supérieure à 1,2 fois la somme d'un rayon extérieur (26) d'une bague extérieure (30) du premier palier à roulement (14) et d'un rayon extérieur (28) d'une bague extérieure (32) du second palier à roulement (16).

7. Moteur à combustion interne ou moteur à pistons alternatifs selon une des revendications 5 ou 6, dans lequel l'unité de palier pour système d'arbres d'équilibrage présente au moins une unité d'amortissement, qui est appliquée à au moins un des paliers à roulement (14).

8. Moteur à combustion interne ou moteur à pistons alternatifs selon l'une quelconque des revendications 5 à 7, **caractérisé en ce que** le premier élément de réception (10) entoure le premier palier à roulement (14) le long d'un pourtour complet du palier à roulement.

9. Moteur à combustion interne ou moteur à pistons alternatifs selon l'une quelconque des revendications précédentes, qui présente un boîtier et au moins un élément d'amortissement (38), qui est disposé à un endroit où l'unité de palier pour système d'arbres d'équilibrage est fixée au boîtier.
